Europäisches Patentamt

European Patent Office

Office européen des brevets

(11) Veröffentlichungsnummer: **0 059 508**
**B1**

(12) **EUROPÄISCHE PATENTSCHRIFT**

(51) Int. Cl.³: **C 04 B 7/44, F 27 B 7/20**

(45) Veröffentlichungstag der Patentschrift:
05.12.84

(21) Anmeldenummer: 82200217.6

(22) Anmeldetag: 23.02.82

(54) Verfahren zur Herstellung von Zementklinker.

(30) Priorität: 28.02.81 DE 3107711

(43) Veröffentlichungstag der Anmeldung:
08.09.82 Patentblatt 82/36

(45) Bekanntmachung des Hinweises auf die Patenterteilung:
05.12.84 Patentblatt 84/49

(84) Benannte Vertragsstaaten:
AT BE CH DE FR GB IT LI LU NL SE

(56) Entgegenhaltungen:
EP - A - 0 000 739
DE - A - 2 712 238
DE - B - 1 767 628
DE - B - 2 344 094
FR - A - 2 200 217
FR - A - 2 221 614
FR - A - 2 275 418
US - A - 4 111 158

(73) Patentinhaber: **METALLGESELLSCHAFT AG,
Reuterweg 14 Postfach 3724, D-6000 Frankfurt/M.1 (DE)**
Patentinhaber: **CREUSOT-LOIRE ENTREPRISES, 33,
quai Gailléni, F-92150 Suresnes (FR)**
Patentinhaber: **LAFARGE COPPEE, 28, rue Emile
Ménier, F-75782 Paris Cedex (FR)**
Patentinhaber: **Foillot, Albert, 8, rue Darcel,
F-92 100 Boulogne (FR)**

(72) Erfinder: **Schmidt, Hans Werner, Dr., Wormser Strasse 8,
D-6000 Frankfurt am Main (DE)**
Erfinder: **Beisswenger, Hans, Freiligrathstrasse 2,
D-6232 Bad Soden (DE)**
Erfinder: **Reh, Lothar, Dr., Stettiner Strasse 3,
D-6000 Frankfurt am Main (DE)**
Erfinder: **Foillot, Albert, 8, rue Darcel, F-92100 Boulogne
(FR)**
Erfinder: **Paliard, Maurice, 16, rue Morinet,
F-71100 Chalon-sur-Saone (FR)**

(74) Vertreter: **Fischer, Ernst, Dr., Reuterweg 14,
D-6000 Frankfurt am Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Zementklinker durch Vorwärmen des Zementrohmehles in einem Suspensionswärmeaustauscher, Entsäuerung in einer Vorkalzinations-Vorrichtung, Klinkerung in einer Wirbelschicht und anschliessende Kühlung des Klinkers.

Zur Herstellung von Zementklinker ist es allgemein üblich, Zementrohmehl im Suspensionswärmeaustauscher von mechanischem und chemisch gebundenem Wasser zu befreien sowie zu einem gewissen Teil zu entsäuern und dann die weitere Entsäuerung und Klinkerung im Drehrohrofen vorzunehmen.

Diese Arbeitsweise bedeutet, dass die Entsäuerung zu einem wesentlichen Teil in den Drehrohrofen verlagert wird, was insbesondere bei hohen Durchsatzleistungen mit dem beträchtlichen Nachteil grosser und anlagetechnisch ungünstiger Drehrohrofenabmessungen verbunden ist.

Es hat daher nicht an Bemühungen gefehlt, die Entsäuerung des Zementrohmehles möglichst weitgehend vor dessen Eintritt in den Drehrohrofen herbeizuführen. Hierzu wurde beispielsweise die unterste Stufe des Suspensionswärmeaustauschers gesondert mit Brennstoff beaufschlagt, um eine weitere Erhitzung und Entsäuerung des Rohmaterials zu erzielen (DE-B 2 324 565). Die Wirksamkeit dieser Arbeitsweise ist jedoch beschränkt, da die Verweilzeit des Rohmaterials im Bereich der erhöhten Temperatur nur kurz ist.

Eine Weiterentwicklung in der Herstellung von Zementklinker besteht darin, eine möglichst weitgehende Entsäuerung des Rohmaterials in einer separaten Vorrichtung, die zwischen Suspensionswärmeaustauscher und Drehrohrofen geschaltet ist, herbeizuführen. Hierfür sind eine beheizbare Förderstrekke, die das aus dem Suspensionswärmeaustauscher austretende Rohmaterial einem dem Drehrohrofen vorgeschalteten Zyklon zuführt (FR-A 2 197 827), oder ein Wirbelschichtreaktor, der das Rohmaterial über eine Rauchkammer und einen Zyklon in den Drehrohrofen einträgt (DE-B 2 344 094), bekannt. In beiden Fällen ist die zur hinreichenden Entsäuerung erforderliche Verweilzeit, insbesondere wegen der üblicherweise unterschiedlichen Körnung des Rohmaterials, nur schwer einstellbar. Auch bereitet der Austrag des Grobkornes Schwierigkeiten.

Weiterhin ist es bekannt, bei einem mit Suspensionswärmeaustauscher und Vorkalzinations-Vorrichtung betriebenen Verfahren zum Brennen von Zementrohmehl den Klinker-Prozess in einer Wirbelschicht durchzuführen (EP-A 0 000 739). Hierbei ist nachteilig, dass sich in der Klinkerstufe die für eine gute Zementqualität erforderliche gleichmässige Verweilzeit praktisch nicht einstellen lässt.

Aufgabe der vorliegenden Erfindung ist es, ein Verfahren bereitzustellen, dass die Nachteile der bekannten, insbesondere vorgenannten Verfahren vermindert und das eine praktisch vollständige Entsäuerung des Zementrohmehles vor dem Eintrag in den Wirbelschichtofen gestattet und mit apparativ vertretbarem Aufwand durchführbar ist.

Die Aufgabe wird gelöst, indem das Verfahren der eingangs genannten Art entsprechend der Erfindung derart ausgestaltet wird, dass man

die Entsäuerung in einem aus einem Wirbelschichtreaktor 5, einem Abscheidezyklon 6 und einer Rückführleitung 7 gebildeten Zirkulationssystem bei einer Temperatur oberhalb 850°C mit einem Entsäuerungsgrad von mindestens 95% durchführt;

den für den Brenn- und Klinker-Prozess erforderlichen kohlenstoffhaltigen Brennstoff zu mindestens 65% (bezogen auf den Gesamtwärmebedarf) dem Wirbelschichtreaktor zur Entsäuerung 5 und zu mindestens 10% (bezogen auf den Gesamtwärmebedarf) dem Wirbelschichtreaktor zur Klinkerung 13, 29 zuführt;

die Verbrennung des dem Wirbelschichtreaktor zur Entsäuerung 5 zugeführten Brennstoffes mit mindestens zwei Teilströmen sauerstoffhaltigen Gases, von denen einer als Fluidisierungsgas 8 und einer in einer höheren Ebene als Sekundärgas 9 zugegeben wird, zweistufig und — auf die Gesamtheit der Verbrennungsstufen bezogen — nahstöchiometrisch durchführt und durch Aufteilung der Fluidisierungsgas- und der Sekundärgasmengen sowie durch Einstellung des Volumenverhältnisses von Fluidisierungsgas zu Sekundärgas innerhalb des Bereiches von 1:1 bis 1:10 in der Zone zwischen Fluidisierungsgaszuführung 8 und Sekundärgaszuführung 9 eine mittlere Suspensionsdichte von 100 bis 300 kg/m$^3$ und in der Zone oberhalb der Sekundärgaszuführung 9 eine mittlere Suspensionsdichte von 5 bis 30 kg/m$^3$ einstellt.

Im Wirbelschichtreaktor des aus Wirbelschichtreaktor, Abscheidezyklon und Rückführleitung gebildeten Zirkulationssystems herrscht ein Wirbelzustand, bei dem — im Unterschied zur «klassischen» Wirbelschicht, bei der eine dichte Phase durch einen deutlichen Dichtesprung von dem darüber befindlichen Gasraum getrennt ist — Verteilungszustände ohne definierte Grenzschicht vorliegen. Ein Dichtesprung zwischen dichter Phase und darüber befindlichem Staubraum ist nicht vorhanden; jedoch nimmt innerhalb des Reaktors die Feststoffkonzentration von unten nach oben ständig ab.

Zwar ist aus der DE-B 1 767 628 ein Verfahren zur Durchführung endothermer Prozesse, u.a. zum Brennen bestimmter Zementrohmehlsorten, bekannt, bei dem man das dem Prozess zu unterwerfende Material in einem mehrstufigen Schwebeaustauscher vorentwässert und/oder erhitzt, über einen Abscheider einem Wirbelschichtofen, dem ein Rückführzyklon zugeordnet ist, zuleitet und schliesslich das Reaktionsprodukt dem aus Wirbelschichtofen und Rückführzyklon gebildeten Kreislauf entnimmt und einem mehrstufigen Wirbelkühler aufgibt, bei dem also das Prinzip der sogenannten «zirkulierenden Wirbelschicht» Anwendung findet. Hierbei erfolgt jedoch der Vorgang der Entsäuerung und des Klinkerns gemeinsam in der Wirbelschicht. Dies hat für den speziellen Anwendungsfall den Nachteil, dass die Entsäuerung bei den hierfür an sich nicht erforderlichen hohen Klinkertemperaturen durchgeführt wird, dadurch hohe Abgasvolumina hoher Temperatur auftreten und entsprechend hohe Brennstoffmengen aufgewendet werden müssen. Ein weiterer bei verschiedenen Einsatzstoffen auftretender Nachteil ist, dass die Produktqualität nicht so hoch ist, als wenn Entsäuerung und Klinkerung in zwei getrennten Stufen durchgeführt würden.

Bei Definition der Betriebsbedingungen des erfindungsgemässen Verfahrens über die Kennzahlen von Froude und Archimedes ergeben sich die Bereiche:

$$0,5 \leq 3/4 \cdot F_r^2 \cdot \frac{\rho_g}{\rho_k - \rho_g} \leq 50$$

bzw.

$$0,01 \leq AR \leq 10$$

wobei

$$Ar = \frac{d_k^3 \cdot g(\rho_k - \rho_g)}{\rho_g \cdot \nu^2}$$

und

$$F_r^2 = \frac{u^2}{g \cdot d_k}$$

ist.

Es bedeuten:

u  die relative Gasgeschwindigkeit in m/sec
Ar  die Archimedeszahl
$\rho_g$  die Dichte des Gases in kg/m$^3$
$\rho_k$  die Dichte des Feststoffteilchens in kg/m$^3$
$d_k$  den Durchmesser des kugelförmigen Teilchens in m
$\nu$  die kinematische Zähigkeit in m$^2$/sec
g  die Gravitationskonstante in m/sec$^2$
$F_r$  die Froude-Zahl

Die überwiegende Menge des dem Wirbelschichtreaktor zur Entsäuerung zuzuführenden Brennstoffes wird unterhalb der Sekundärgaszuführung zugegeben. Hierdurch und durch die Aufteilung der insgesamt zur Verbrennung erforderlichen sauerstoffhaltigen Gase auf zwei in unterschiedlicher Höhe zugeführte Teilströme wird eine zweistufige «weiche» Verbrennung erzielt, so dass im Wirbelschichtreaktor lokale Überhitzungserscheinungen vermieden werden. Ausserdem wird die Entstehung von Stickoxiden stark, z.B. auf Werte unter 100 ppm, zurückgedrängt.

Der Wirbelschichtreaktor kann von rechteckigem, quadratischem od. kreisförmigem Querschnitt sein. Der untere Bereich des Wirbelschichtreaktors kann auch konisch ausgebildet sein, was insbesondere bei grossen Reaktorquerschnitten vorteilhaft ist.

Die im Wirbelschichtreaktor oberhalb der Sekundärgaszuführung herrschenden Gasgeschwindigkeiten liegen bei Normaldruck im Regelfall über 5 m/sec und können bis zu 15 m/sec betragen.

Das Verhältnis von Durchmesser zu Höhe des Wirbelschichtreaktors sollte derart gewählt werden, das Gasverweilzeiten von 0,5 bis 8,0 sec, vorzugsweise 1 bis 4 sec, erhalten werden.

Zweckmässigerweise wird das Sekundärgas, das auch in mehreren Ebenen und unterhalb jeder Eintragsebene durch mehrere Zuführungsöffnungen zugegeben werden kann, in einer Höhe von 30% (bezogen auf die Gesamthöhe des Wirbelschichtreaktors), mindestens jedoch 1 m über der Einleitung des Fluidisierungsgases, zugeführt. Sofern das Sekundärgas in mehreren Ebenen zugeführt wird, sollte die Lage der obersten Sekundärgasleitung die erwähnten 30% der Reaktorhöhe nicht überschreiten. Diese Höhe schafft einerseits einen hinreichend grossen Raum für die erste Verbrennungsstufe mit nahezu vollständiger Umsetzung zwischen kohlenstoffhaltigem Material und sauerstoffhaltigem Fluidisierungsgas und gewährleistet andererseits, dass im oberen, über der Sekundärgaszuführung liegenden Reaktionsraum der Sauerstoff entsprechend dem gewählten stöchiometrischen Verhältnis umgesetzt wird.

Als Brennstoff kann Heizöl, Kohle, insbesondere Braunkohle, Kohle mit hohem Aschenanteil, wie Waschberge, Ölschiefer und gegebenenfalls Hausmüll, eingesetzt werden. Für die Klinkerstufe empfiehlt sich die Verwendung eines heizwertreichen Brennstoffes.

Hinsichtlich der Brennstoffaufteilung ist es besonders zweckmässig, den für den Brenn- und Klinker-Prozess erforderlichen Brennstoff zu 70 bis 85% (bezogen auf den Gesamtwärmebedarf) dem Wirbelschichtreaktor zur Entsäuerung und zu 15 bis 30% (bezogen auf den Gesamtwärmebedarf) dem Wirbelschichtreaktor zur Klinkerung zuzuführen. Der dem Wirbelschichtreaktor zur Klinkerung zugeführte Brennstoff dient im wesentlichen dazu, die Aufheizung des Materialstromes, der aus dem Wirbelschichtreaktor zur Entsäuerung austritt, und die Kompensation der Abstrahlungsverluste zu bewirken.

Um die mindestens 95%ige Entsäuerung des Rohmaterials zu erzielen, wird dessen Verweilzeit vorzugsweise auf 3 bis 15, insbesondere 5 bis 10 Minuten eingestellt. Unter Berücksichtigung der einzustellenden Temperatur im Zirkulationssystem, die vorteilhafterweise im Bereich von 950 bis 1150°C liegen sollte, lassen sich so praktisch alle Rohmaterialien, selbst bei breitem Kornspektrum und grober Körnung, erfolgreich verarbeiten. Die im Zirkulationssystem herrschende Temperaturkonstanz sowie die definierten Feststoffverweilzeiten führen zudem zu einer grossen Homogenität des entsäuerten Produktes.

Sofern ein fester kohlenstoffhaltiger Brennstoff eingesetzt werden soll, empfiehlt es sich, die Körnung auf einen mittleren Teilchendurchmesser von < 500 $\mu$m, vorzugsweise auf einen Wert im Bereich von 100 bis 300 $\mu$m, einzustellen. Der mittlere Teilchendurchmesser ist derart definiert, dass 50 Gew.-% über und 50 Gew.-% des Materials unter dem jeweiligen Wert liegen.

Die Klinkerung des kalzinierten Zementrohmehles kann in der klassischen Wirbelschicht erfolgen, wobei Fluidisierungsgasgeschwindigkeiten von etwa 2 bis 4 m/sec eingestellt werden.

Besonders vorteilhaft ist es jedoch, auch für die Klinkerstufe eine zirkulierende Wirbelschicht einzusetzen, die im Unterschied zur zirkulierenden Wirbelschicht für die Verfahrensstufe der Entsäuerung jedoch ohne Sekundärgas betrieben werden sollte. Die über die gesamte Reaktorhöhe gemittelte Suspensionsdichte sollte zweckmässigerweise auf einen Wert im Bereich von 100 bis 300 kg/m$^3$ eingestellt werden. Es ist zweckmässig, das aufzugebende kalzinierte Rohmaterial an einer möglichst tief gelegenen Stelle des Reaktors, gegebenenfalls sogar in die Fluidisierungsgaszuführung einzuleiten. Gleiches gilt für die Zufuhr des Brennstoffes.

Die in der zirkulierenden Wirbelschicht einzustellende Gasgeschwindigkeit sollte bei etwa 2 bis 6 m/sec bei einem mittleren Korndurchmesser des Klinkers von 200 bis 500 $\mu$m betragen.

Die Kühlung des Klinkers wird vorzugsweise unter Aufheizung von sauerstoffhaltigem Gas vorgenommen, das mindestens teilweise dem Prozess der Kalzination und Klinkerung zugeführt wird. Dabei ist es von Vorteil, die Kühlung sowohl auf direktem als auch auf indirektem Wege durchzuführen.

Als Kühler eignen sich insbesondere Wirbelschichtkühler, vorzugsweise solche mit mehreren separaten oder zu einer baulichen Einheit verbundenen Kammern. Der in der ersten Kammer aufgeheizte und demzufolge heisseste Strom sauerstoffhaltigen Gases wird zweckmässigerweise dem Wirbelschichtreaktor der Klinkerstufe als Fluidisierungsgas aufgegeben.

Die weiteren in der Kühlstufe erhaltenen aufgeheizten Gasströme werden vorteilhafterweise in die der Entsäuerung dienende Wirbelschicht geführt. Dabei empfiehlt es sich, die indirekt aufgeheizten sauerstoffhaltigen Gase als Fluidisierungsgas und die direkt aufgeheizten sauerstoffhaltigen Gase als Sekundärgas zu verwenden. Ein gegebenenfalls verbleibender Gasstrom kann dem Suspensionswärmeaustauscher zugeführt werden.

Der Abgasstrom des Zirkulationssystems wird üblicherweise quantitativ dem Suspensionswärmeaustauscher zugeleitet. Der Abgasstrom des Wirbelschichtreaktors zur Klinkerung kann ebenfalls dem Suspensionswärmeaustauscher aufgegeben werden. Enthält das Zementrohmehl hingegen höhere Gehalte verflüchtigbarer Alkalien, so sollte — je nach Alkaligehalt — ein kleinerer oder grösserer Teilstrom am Suspensionswärmeaustauscher vorbeigeführt werden. Im Extremfall, d.h. bei besonders hohen Alkaligehalten, ist eine 100%ige Bypass-Führung angebracht.

Die herausragenden Vorteile des erfindungsgemässen Verfahrens sind: im Zirkulationssystem kann die Rohmaterialverweilzeit sehr genau eingestellt und kontrolliert werden, so dass praktisch keine Schwankungen im Entsäuerungsgrad des Rohmaterials auftreten. Ausserdem herrscht im Zirkulationssystem eine praktisch gleichmässige Temperatur, d.h., es werden Temperaturspitzen, die zu an dieser Stelle unerwünschten Verflüchtigungsreaktionen führen können, vermieden. Das Zirkulationssystem gewährleistet weiterhin einen konstanten Materialfluss in den Wirbelschichtofen zur Klinkerung, wodurch eine hohe Klinkerqualität erzielt wird. Der hohe Entsäuerungsgrad im Zirkulationssystem entlastet den Wirbelschichtofen zur Klinkerung, so dass dort praktisch nur noch das Klinker-Brennen erfolgt. Seine Abmessungen können daher klein gehalten werden, was letztlich auch mit einer Energieersparnis infolge verringerter Wärmebestrahlung verbunden ist.

Das Verfahren gestattet die Verwendung minderwertiger Brennstoffe und einen geringen Aufmahlungsgrad der einzusetzenden Ausgangsstoffe. Bei Einsatz von Ausgangsstoffen, die zu sogenanntem «Naturzement» führen (Ausgangsstoffe mit einer homogenen Mischung der zementbildenden Komponenten), ist eine noch geringere Aufmahlung erforderlich. Bei Vorliegen alkalireicher Ausgangsstoffe, die eine Bypass-Führung erforderlich machen, sind die Wärmeverluste durch verringerte, aus der Klinkerstufe stammende Gase geringer.

Die Erfindung wird anhand der Figuren und des Ausführungsbeispiels beispielsweise und näher erläutert.

*Figur 1*

Das Zementrohmehl wird bei 1 dem Suspensionswärmeaustauscher 2 (vereinfachte Darstellung mit 2 Abscheidezyklonen und einem Venturiwirbler) aufgegeben und nach Vorwärmung durch die bei 3 aus dem Zirkulationssystem austretenden Abgase über Leitung 4 zur Kalzination dem Zirkulationssystem zugeführt.

Das Zirkulationssystem besteht aus dem Wirbelschichtreaktor 5, dem Abscheidezyklon 6 und der Rückführleitung 7. Der Wirbelschichtreaktor 5 wird über Leitung 8 mit Fluidisierungsgas und über Leitung 9, die in Nähe des Wirbelschichtreaktors 5 zweckmässigerweise als Ringleitung ausgebildet wird, mit Sekundärgas versorgt. Der Eintrag des Brennstoffes erfolgt über Lanze 10.

Über die mit einem Spiess geregelte Entnahmevorrichtung 11 wird mittels Leitung 12 ein kontinuierlicher Materialstrom abgezogen und einem zweiten Zirkulationssystem, das wiederum einen Wirbelschichtreaktor 13, einen Abscheidezyklon 14 und eine Rückführleitung 15 aufweist, zugeführt. In dem zweiten Zirkulationssystem erfolgt die Klinkerung durch Aufheizung mit einer vergleichsweise geringen Brennstoffmenge, die über Leitung 16 eingetragen wird.

Im Unterschied zum ersten Zirkulationssystem (5, 6, 7) für die Entsäuerung des Zementrohmehles ist hier wegen der Erzeugung einer Temperaturspitze (lokale Überhitzung) die Zufuhr des gesamten für die Verbrennung des Brennstoffes erforderlichen sauerstoffhaltigen Gases an einer Stelle erwünscht.

Nach hinreichend langer Verweilzeit wird der fertige Zementklinker dann über eine zweite mit Spiess geregelte Entnahmevorrichtung 17 und Leitung 18 einem Wirbelschichtkühler 19 zugeleitet. In dessen — im Materialfluss gesehen — erster Kammer 20 wird die Fluidisierungsluft für den Wirbelschichtreaktor 13 aufgeheizt, die über Leitung 21 abgeführt wird. Die folgenden Kühlkammern 22 und 23 weisen miteinander verbundene, in die Kühlkammern eintauchende Kühlflächen 24 auf, in denen auf indirektem Wege die Fluidisierungsluft für den Wirbelschichtreaktor 5 aufgeheizt wird. Die in den Kühlkammern 22 und 23 direkt aufgeheizte Luft wird in der Haube 25 gesammelt und über Leitung 9 als Sekundärluft in den Wirbelschichtreaktor 5 eingetragen. Die Entnahme des gekühlten Klinkers erfolgt schliesslich über Leitung 26.

Das Abgas des Wirbelschichtreaktors 13 gelangt über Leitung 27 in den Suspensionswärmeaustauscher 2. Mittels Leitung 28 kann im Bedarfsfall ein Teilstrom des Abgases — im Extremfall der gesamte Gasstrom — am Suspensionswärmeaustauscher 2 vorbeigeführt werden. Dieses Gas wird dann üblicherweise in einem Gaskühler (nicht dargestellt) gekühlt und gereinigt.

*Figur 2*

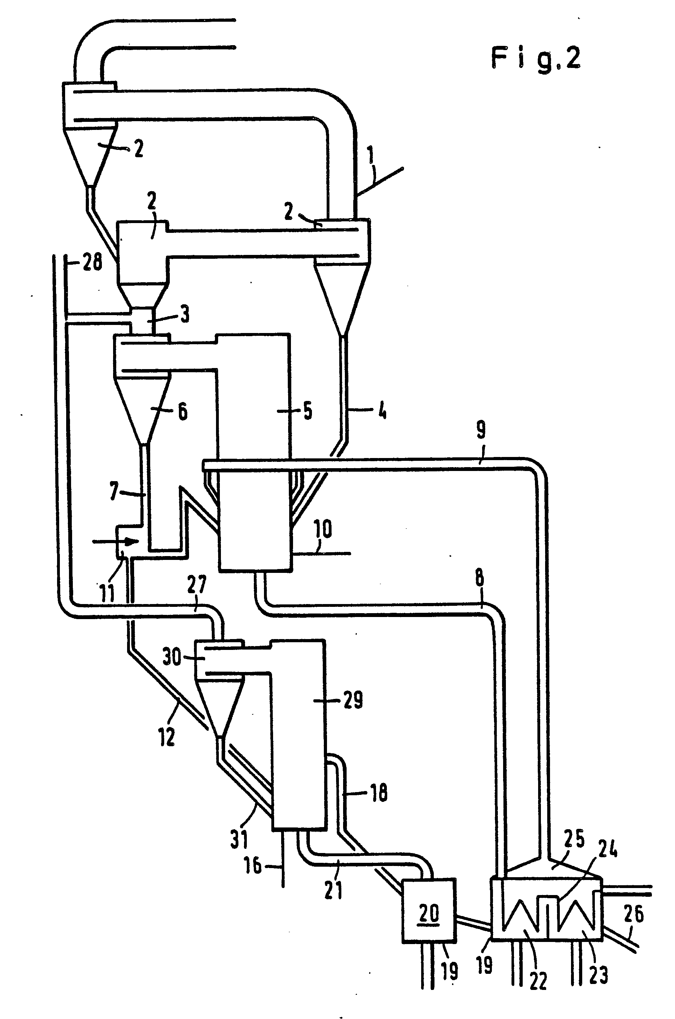

Beim Fliessschema der Fig. 2 erfolgt die Klinkerung des über Leitung 12 aus dem Zirkulationssystem (5, 6, 7) abgezogenen Kalzinats in einer klassischen Wirbelschicht 29. Das heisst, die Wirbelbedingungen sind derart, dass sich eine Wirbelschicht mit definierter Bettoberfläche ausbilden kann. Mit dem Gasstrom ausgetragene Feinanteile werden in einem Zyklon 30 abgeschieden und vermittels der Leitung 31 wieder in den Wirbelschichtreaktor 29 eingetragen.

Aus dem Wirbelschichtreaktor 29 wird mit Hilfe der als Überlauf ausgebildeten Leitung 18 Klinker abgezogen und in die baulich abgetrennte erste Kühlkammer 20 des Wirbelschichtkühlers 19 eingetragen. Die bei der Kühlung erhaltene aufgeheizte Kühlluft gelangt über Leitung 21 in den Wirbelschichtreaktor 29. Die weitere Kühlung des Klinkers erfolgt dann in den Kühlkammern 22 und 23 des Wirbelschichtkühlers 19.

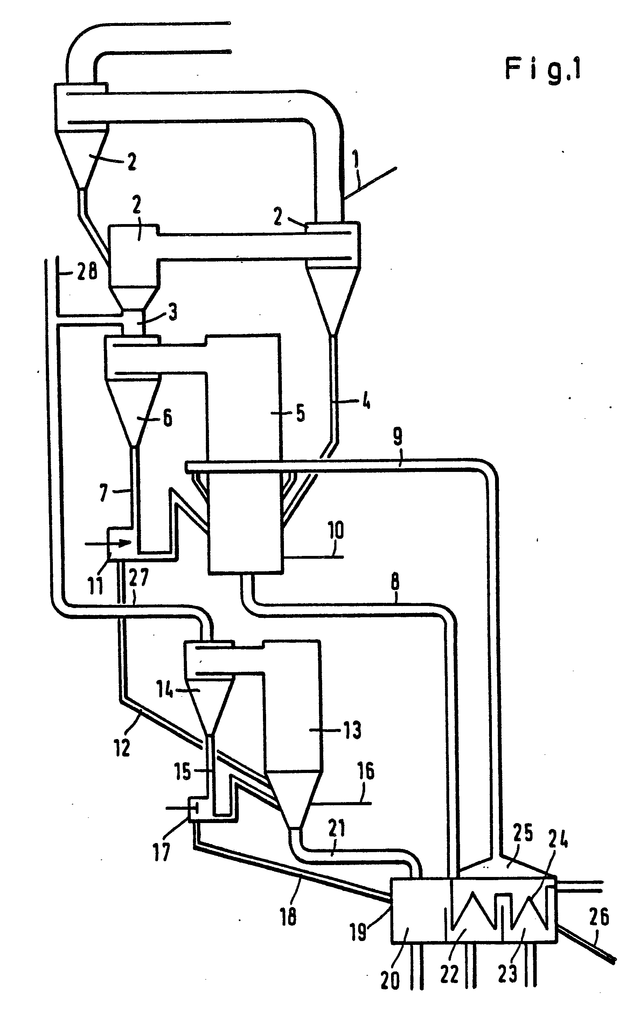

Sämtliche weiteren Vorrichtungsteile und Leitungen der Fig. 2 entsprechen denen der Fig. 1 und sind mit identischen Bezugszeichen versehen.

*Beispiel* (mit Bezug auf Fig. 2)

Über Aufgabevorrichtung 1 wurden dem Suspensionswärmeaustauscher 2 3,1 t/h Zementrohmehl mit einem mittleren Teilchendurchmesser von 30 $\mu$m aufgegeben. Das Zementrohmehl bestand aus:

2,40 t Kalkstein (CaCO$_3$)
0,25 t Quarzsand (SiO$_2$)
0,45 t Ton (alkalireich).

Es wurde durch das aus dem Zirkulationssystem bei 3 austretende Abgas von 1150°C im Suspensionswärmeaustauscher 2 auf ca. 950°C vorgewärmt und dann über Leitung 4 in den Wirbelschichtreaktor 5 eingetragen. Dem Wirbelschichtreaktor 5 wurden weiterhin über Leitung 10 0,5 t/h Kohle mit einem mittleren Korndurchmesser von 200 $\mu$m und einem Heizwert H$_u$ von 12 MJ/kg sowie über Leitungen 8 und 9 560 m$_N^3$/h Fluidisierungsgas von 450°C bzw. 1320 m$_N^3$/h Sekundärgas von 710°C aufgegeben.

Im aus Wirbelschichtreaktor 5, Abscheidezyklon 6 und Rückführleitung 7 gebildeten Zirkulationssystem stellte sich eine Temperatur von 1150°C ein. Aufgrund der Menge und Aufteilung der Gasströme ergab sich im Wirbelschichtreaktor 5 unterhalb der Sekundärgaszuführung 9 eine mittlere Suspensionsdichte von 150 kg/m$^3$ und oberhalb der Sekundärgaszuführung 9 eine solche von 10 kg/m$^3$. Die mittlere Verweilzeit im Zirkulationssystem lag bei 8 min und der Entsäuerungsgrad bei 99,2%.

Über die Entnahmevorrichtung 11 wurden 2 t/h kalziniertes Zementrohmehl entnommen und über Leitung 12 dem Wirbelschichtreaktor 29 zugeführt. Der Wirbelschichtreaktor 29 wurde ausserdem über Lanze 16 mit 0,0185 t/h Kohle mit einer Körnung von 20% > 90 $\mu$m und einem Heizwert H$_u$ von 25 MJ/kg sowie über Leitung 21 mit 132 m$_N^3$/h Luft, die in der Kühlkammer 20 des Wirbelschichtkühlers 19 auf 1280°C aufgeheizt worden war, beaufschlagt. Die Temperatur im Wirbelschichtreaktor 29 betrug 1400°C. Ausserdem waren die Suspensionsdichte im Bett des Wirbelschichtreaktors 29 200 kg/m$^3$, die Wirbelgasgeschwindigkeit 2 m/sec (bezogen auf den leeren Reaktor) und der mittlere Korndurchmesser 300 $\mu$m.

Anschliessend wurde der Klinker über Leitung 18 in die erste Kühlkammer 20 des Wirbelschichtkühlers 19 eingetragen und dort mit 132 m$_N^3$/h Fluidisierungsgas, das sich auf 1280°C aufheizte, gekühlt. Die Luft gelangte — wie vorstehend erwähnt — über Leitung 21 in den Wirbelschichtreaktor 29.

Die weitere Kühlung erfolgte in den Kühlkammern 22 und 23 des Wirbelschichtkühlers 19 direkt gegen 1320 m$_N^3$/h Fluidisierungsluft und indirekt gegen 560 m$_N^3$/h Kühlluft, die durch die Kühlflächen 24 geführt wurde. Die Luftströme wurden dabei auf 710°C bzw. 450°C aufgeheizt und über die Leitungen 9 bzw. 8 dem Wirbelschichtreaktor 5 als Sekundärluft bzw. als Fluidisierungsluft zugeleitet. Die Klinker-Produktion betrug 2 t/h.

Das den Wirbelschichtreaktor 29 verlassende Abgas wurde infolge seines hohen Alkaligehaltes über Leitung 28 zu 100% am Suspensionswärmeaustauscher 2 vorbeigeführt und in einem Gaskühler (nicht dargestellt) gekühlt und gereinigt.

**Patentansprüche**

1. Verfahren zur Herstellung von Zementklinker durch Vorwärmen des Zementrohmehles in einem Suspensionswärmeaustauscher, Entsäuerung in einer Vorkalzinations-Vorrichtung, Klinkerung in einer Wirbelschicht und anschliessende Kühlung des Klinkers, dadurch gekennzeichnet, dass man

die Entsäuerung in einem aus einem Wirbelschichtreaktor (5), einem Abscheidezyklon (6) und einer Rückführleitung (7) gebildeten Zirkulationssystem bei einer Temperatur oberhalb 850°C mit einem Entsäuerungsgrad von mindestens 95% durchführt;

den für den Brenn- und Klinker-Prozess erforderlichen kohlenstoffhaltigen Brennstoff zu mindestens 65% (bezogen auf den Gesamtwärmebedarf) dem Wirbelschichtreaktor zur Entsäuerung (5) und zu mindestens 10% (bezogen auf den Gesamtwärmebedarf) dem Wirbelschichtreaktor zur Klinkerung (13), (29) zuführt;

die Verbrennung des dem Wirbelschichtreaktor zur Entsäuerung (5) zugeführten Brennstoffes mit mindestens zwei Teilströmen sauerstoffhaltigen Gases, von denen einer als Fluidisierungsgas (8) und einer in einer höheren Ebene als Sekundärgas (9) zugegeben wird, zweistufig und — auf die Gesamtheit der Verbrennungsstufen bezogen — nahstöchiometrisch durchführt und durch Aufteilung der Fluidisierungsgas- und der Sekundärgasmengen sowie durch Einstellung des Volumenverhältnisses von Fluidisierungsgas zu Sekundärgas innerhalb des Bereiches von 1:1 bis 1:10 in der Zone zwischen Fluidisierungsgaszuführung (8) und Sekundärgaszuführung (9) eine mittlere Suspensionsdichte von 100 bis 300 kg/m$^3$ und in der Zone oberhalb der Sekundärgaszuführung (9) eine mittlere Suspensionsdichte von 5 bis 30 kg/m$^3$ einstellt.

2. Verfahren nach Anspruch 1, dadurch gekennzeichnet, dass man den für den Brenn- und Klinker-Prozess erforderlichen Brennstoff zu 70 bis 85% (bezogen auf den Gesamtwärmebedarf) dem Wirbelschichtreaktor der Entsäuerungsstufe (5) und zu 15 bis 30% (bezogen auf den Gesamtwärmebedarf) dem Wirbelschichtreaktor der Klinkerstufe (13, 29) zuführt.

3. Verfahren nach Anspruch 1, dadurch gekennzeichnet, dass man die Verweilzeit des Feststoffes im Zirkulationssystem der Entsäuerungsstufe auf 3 bis 15, vorzugsweise 5 bis 10, Minuten einstellt.

4. Verfahren nach Anspruch 1, dadurch gekennzeichnet, dass man die Temperatur im Zirkulationssystem der Entsäuerungsstufe auf einen Wert im Bereich von 950 bis 1150°C einstellt.

5. Verfahren nach Anspruch 1, dadurch gekennzeichnet, dass man bei Verwendung fester kohlenstoffhaltiger Brennstoffe die Körnung auf einen Korndurchmesser $d_p$ 50 < 500 $\mu$m, vorzugsweise auf einen Wert im Bereich von 100 bis 300 $\mu$m, einstellt.

6. Verfahren nach Anspruch 1, dadurch gekennzeichnet, dass man die Klinkerung in einem aus dem Wirbelschichtreaktor (13), einem Abscheidezyklon (14) und einer Rückführleitung (15) gebildeten Zirkulationssystem durchführt.

7. Verfahren nach Anspruch 1, dadurch gekennzeichnet, dass man die Kühlung des Klinkers unter Aufheizung von sauerstoffhaltigem Gas, das mindestens teilweise dem Entsäuerungs- und/oder Klinker-Prozess zugeleitet wird, vornimmt.

8. Verfahren nach Anspruch 7, dadurch gekennzeichnet, dass man die Kühlung des Klinkers mit sauerstoffhaltigem Gas, das sowohl direkt als auch indirekt aufgeheizt wird, vornimmt.

9. Verfahren nach Anspruch 7 oder 8, dadurch gekennzeichnet, dass man den Klinker in einer Wirbelschicht (19), die vorzugsweise mehrere separate oder zu einer baulichen Einheit verbundene Kühlkammern (20, 22, 23) aufweist, kühlt.

10. Verfahren nach Anspruch 7, 8 oder 9, dadurch gekennzeichnet, dass man das in der ersten Kühlkammer (20) des Wirbelschichtkühlers (19) direkt aufgeheizte sauerstoffhaltige Gas dem Wirbelschichtreaktor (13, 29) der Klinkerstufe als Fluidisierungsgas zuführt.

## Claims

1. Process for the production of cement clinker comprising preheating the raw cement powder in a suspension-type heat exchanger, de-acidifying in a pre-calcining system, clinkering in a fluidized bed, and subsequently cooling the clinker, characterized in that a de-acidification is effected in a circulation system comprising a fluidized bed reactor (5), a cyclone separator (6) and a recycling duct (7) at a temperature above 850°C to at least 95%, the fuel required for the calcining and clinkering processes is fed in an amount of at least 65% (related to the total heat requirement) to the de-acidifying fluidized bed reactor (5) and in an amount of at least 10% (related to the total heat requirement) to the clinkering fluidized bed reactor (13, 29); the fuel supplied to the de-acidifying fluidized bed reactor (5) is near stoichiometrically burnt in two combustion stages with at least two partial streams of oxygen-containing gas, one of said stream is supplied as fluidizing gas (8) and the other is supplied on a higher level as secondary gas (9), and the ratio of the rates and volumes of fluidizing gas to secondary gas is maintained in the range from 1:1 to 1:10 so that a mean suspension density of 100 to 300 kg/m$^3$ is maintained in the zone between the inlet (8) for fluidizing gas and the inlet (9) for secondary gas, and a mean suspension density of 5 to 30 kg/m$^3$ is maintained above the inlet (9) for a secondary gas.

2. Process according to claim 1, characterized in that the fuel required for the calcining and clinkering process is supplied at the rate of 70 to 85% (related to the total heat requirement) to the de-acidifying fluidized bed reactor (5) and at the rate of 15 to 30% (related to the total heat requirement) to the clinkering fluidized bed reactor (13, 29).

3. Process according to claim 1, characterized in that the residence time of the solids in the de-acidifying circulation system is adjusted to 3 to 15 minutes, preferably to 5 to 10 minutes.

4. Process according to claim 1, characterized in that a temperature in the range of 950 to 1150°C is adjusted in the de-acidifying circulation system.

5. Process according to claim 1, characterized in that a median particle diameter $d_p$ 50 below 500 $\mu$m, preferably in the range of 100 to 300 $\mu$m, is adjusted, if solid carbonaceous fuels are used.

6. Process according to claim 1, characterized in that clinkering is effected in a circulation system comprising a fluidized bed reactor (13), a cyclone separator (14) and a recycling duct (15).

7. Process according to claim 1, characterized in that the cooling of the clinker is effected by heating of oxygen-containing gas, at least part of which is supplied to the de-acidifying and/or clinkering process.

8. Process according to claim 7, characterized in that the cooling of the clinker is effected by oxygen-containing gas, which is heated directly as well as indirectly.

9. Process according to claim 7 or 8, characterized in that the clinker is cooled in a fluidized bed (19), which preferably comprises a plurality of cooling chambers (20, 22, 23), which are separate or combined in a structural unit.

10. Process according to claim 7, 8 or 9, characterized in that the oxygen-containing gas which has been directly heated in the first cooling chamber (20) of the fluidized bed cooler (19) is supplied as fluidizing gas to the fluidized bed reactor (13, 29) of the clinkering stage.

## Revendications

1. Procédé de préparation du clinker de ciment par préchauffage de la farine crue de ciment dans un échangeur de chaleur à suspension, par décarbonatation dans une installation de précalcination, par clinkérisation dans un lit fluidisé, et ensuite par refroidissement du clinker, caractérisé en ce qu'il consiste:

à effectuer la décarbonatation dans un système de circulation constitué d'un réacteur à lit fluidisé (5), d'un cyclone séparateur (6) et d'un conduit de retour (7), à une température supérieure à 850°C, avec un degré de décarbonatation d'au moins 95%;

à envoyer le combustible carboné nécessaire au processus de calcination et de clinkérisation, pour au moins 65% (rapportés au besoin de chaleur total) au réacteur à lit fluidisé pour la décarbonatation (5), et pour au moins 10% (rapportés au besoin de chaleur total) au réacteur à lit fluidisé pour la clinkérisation (13), (29);

à effectuer, en deux stades et — rapportée à l'ensemble des stades de combustion — presque stoechiométriquement, la combustion du combustible amené au réacteur à lit fluidisé pour la décarbonation (5), par au moins deux courants partiels de gaz contenant de l'oxygène dont l'un est amené à titre de gaz de fluidisation (8) et l'autre à titre de gaz secondaire (9), dans un plan plus élevé, et à ajuster en répartissant les quantités de gaz de fluidisation et de gaz secondaire, ainsi qu'en réglant le rapport volumique du gaz de fluidisation au gaz secondaire dans la plage comprise entre 1:1 à 1:10 dans la zone comprise entre l'admission du gaz de fluidisation (8) et l'admission du gaz secondaire (9), à une densité de suspension moyenne de 100 à 300 kg/m$^3$ et dans la zone située au-dessus de l'admission du gaz secondaire une densité moyenne de suspension de 5 à 30 kg/m$^3$.

2. Procédé suivant la revendication 1, caractérisé en ce qu'il consiste à envoyer comme combustible nécessaire au processus de calcination et de clinkérisation, pour 70 à 85% (rapportés au besoin total de chaleur) au réacteur à lit fluidisé du stade de décarbonatation (5), et pour 15 à 30% (rapportés au besoin total de chaleur) au réacteur à lit fluidisé du stade de clinkérisation (13, 29).

3. Procédé suivant la revendication 1, caractérisé en ce qu'il consiste à régler le temps de séjour de la matière solide dans le système de circulation du stade de décarbonatation entre 3 et 15 minutes et, de préférence, entre 5 et 10 minutes.

4. Procédé suivant la revendication 1, caractérisé en ce qu'il consiste à régler la température du système de circulation du stade de décarbonatation à une valeur comprise entre 950 et 1150°C.

5. Procédé suivant la revendication 1, caractérisé en ce qu'il consiste à régler, quand on utilise du combustible carboné solide, la granulométrie à un diamètre de grains $d_p$ 50 < 500 microns et, de préférence à une valeur comprise entre 100 et 300 microns.

6. Procédé suivant la revendication 1, caractérisé en ce qu'il consiste à effectuer la clinkérisation dans un système de circulation formé du réacteur à lit fluidisé (13), d'un cyclone séparateur (14) et d'un conduit de retour (15).

7. Procédé suivant la revendication 1, caractérisé en ce qu'il consiste à effectuer le refroidissement du clinker tout en chauffant le gaz contenant de l'oxygène, qui est envoyé au moins en partie au processus de décarbonatation et/ou de clinkérisation.

8. Procédé suivant la revendication 7, caractérisé en ce qu'il consiste à effectuer le refroidissement du clinker par du gaz contenant de l'oxygène, qui est chauffé aussi bien directement qu'indirectement.

9. Procédé suivant la revendication 7 ou 8, caractérisé en ce qu'il consiste à refroidir le clinker dans un lit fluidisé (19) qui présente, de préférence, plusieurs chambres de refroidissement (20, 22, 23) distinctes ou reliées en une unité de construction.

10. Procédé suivant la revendication 7, 8 ou 9, caractérisé en ce qu'il consiste à envoyer le gaz contenant de l'oxygène chauffé directement dans la première chambre de refroidissement (20) du refroidisseur à lit fluidisé (19) au réacteur à lit fluidisé (12, 29) du stade de clinkérisation, à titre de gaz de fluidisation.

Fig.1

Fig.2